# EUROPEAN PATENT SPECIFICATION

(11) **EP 2 841 492 B1**
(45) Date of publication and mention of the grant of the patent: **30.10.2019**
(21) Application number: 13781917.3
(22) Date of filing: 23.04.2013
(51) Int. Cl.: C08J 9/08, C08G 18/08, C08G 18/72, C08L 75/04, C08L 101/00

(54) **VISCOELASTIC POLYURETHANE FOAMS**
VISKOELASTISCHE POLYURETHANSCHÄUME
MOUSSES DE POLYURÉTHANE VISCOÉLASTIQUES

(30) Priority: 26.04.2012 US 201213456445
(43) Date of publication of application: 04.03.2015
(73) Proprietor: Covestro LLC, Pittsburgh, PA 15205 (US); Covestro Deutschland AG, 51373 Leverkusen (DE)
(72) Inventor: HAGER, Stanley, L., Cross Lanes, WV 25313 (US); MC VEY, Susan, Houston 15342 (US); DEPHILLIPO, Glenn, Drexel Hill, PA 19026 (US); GOSSNER, Matthaeus, 51061 Cologne (DE); NAUJOKS, Manfred, D51519 Odenthal (DE); MEYER-AHRENS, Sven, 51375 Leverkusen (DE); MARCINKOWSKY, Alan, A.E., Charleston, WV 25402 (US)
(74) Representative: Levpat
(86) International application number: PCT/US2013/037740
(87) International publication number: WO 2013/163143

(56) References cited:
- WO-A1-02/077056
- WO-A1-2012/033674
- JP-A- 2006 070 241
- US-A1- 2004 254 256
- US-A1- 2010 160 470
- US-A1- 2011 034 575
- US-A1- 2015 122 407
- US-B1- 6 762 214

## Description

### FIELD OF THE INVENTION

The present invention relates to a process for the production of viscoelastic polyurethane foams. These soft foams are useful in a wide variety of applications such as bedding, shoe soles, ear plugs, and protective sports equipment.

### BACKGROUND OF THE INVENTION

Flexible, viscoelastic polyurethane foam (also known as "dead" foam, "slow recovery" foam," memory" foam or "high damping" foam) is characterized by slow, gradual recovery from compression. While most of the physical properties of viscoelastic foams resemble those of conventional foams, the resilience of viscoelastic foams is much lower, generally less than 15%. Suitable applications for viscoelastic foam take advantage of its shape conforming, energy attenuating and sound damping characteristics. For example, the foam can be used in mattresses to reduce pressure points, in athletic padding or helmets as a shock absorber, and in automotive interiors for soundproofing.

Various synthetic approaches have been used to make viscoelastic foam. Formulators have modified the amount and type of polyol(s), polyisocyanate, surfactants, foaming catalysts, fillers (e.g., U.S. Patent 4,367,259), or other components, to arrive at foams having slow recovery, low resilience, good softness, and the right processing characteristics. Too often, however, the window for processing these formulations is undesirably narrow.

The most common approaches to making a viscoelastic foam with good properties hinge on finding the right mixture of polyether polyols and other components. For example, U.S. Pat. No. 4,987,156 arrives at soft, low-resilience foams with a mixture of high and low molecular weight polyols, each of which has a hydroxyl functionality of at least 2, and a plasticizer having a solidification point less than -20°C. U.S. Patent No. 5,420,170 teaches to use a mixture that includes one polyol having a hydroxyl functionality of 2.3-2.8, and another polyol having functionality 2-3. U.S. Patent 5,919,395 takes a similar approach with a polyol mixture that contains a 2500 to 6500 molecular weight polyol having a functionality of 2.5 to 6 and a rigid polyol having molecular weight 300 to 1000 and a functionality of 2.5 to 6.

The production of high quality viscoelastic foams of low to moderate density and firmness is hampered by the large amount of isocyanate that must be used to react with the low equivalent weight polyols used to impart the slow recovery characteristics and to chemically generate gas (carbon dioxide) to blow the foam to lower density. This level of isocyanate can lead to high temperatures in the foam blocks and increased discoloration especially when TDI is employed. The high levels of MDI needed to achieve lower density results in viscoelastic foam with a harsh feel and unacceptably slow recovery. Physical blowing agents such as acetone, methylene chloride or pressurized liquid carbon dioxide are typically used in the production of conventional and high resilience foams with TDI to achieve lower densities with reduced block temperatures. Use of this approach in viscoelastic foam production with TDI is restricted due to excessive softening and lack of processing latitude due to excessive tightening or instability of the foam. Raising the isocyanate index to counteract the softening effect of the blowing agent often results in pruning and non-usable foam.

It would therefore be advantageous to develop an MDI-based system for producing viscoelastic polyurethane foams with good processing latitude and with good physical and mechanical properties, particularly, viscoelastic foams of low to moderate density and firmness with a favorable balance of properties, including low resilience, slow recovery, and low compression sets.

### SUMMARY OF THE INVENTION

The present invention is directed to a process for making viscoelastic foam characterized by slow recovery, low resilience, good softness, and low compression sets.

The foams made by the process of the present invention are produced using an isocyanate component that includes at least 25% by weight of diphenylmethane polyisocyanate (MDI). Additionally the foams are produced with at least 0.5 parts by weight of liquid carbon dioxide blowing agent that is dissolved or dispersed under pressure in the isocyanate and/or isocyanate reactive components of the foam formulation. Liquid carbon dioxide dispersed under pressure in one or more polyol components of the formulation is the preferred method of addition of the blowing agent. When this isocyanate component and isocyanate-reactive mixture are combined in the presence of the dispersed or dissolved liquid carbon dioxide blowing agent and a surfactant, and one or more catalysts at an isocyanate index of from 60 to 110, the result is a viscoelastic polyurethane foam having a ball rebound of less than 20% (determined in accordance with ASTM D 3574 -08 Test H) and a 95% height recovery time (determined in accordance with ASTM D 3574 -08 Test M) of greater than 4 seconds.

### DETAILED DESCRIPTION OF THE INVENTION

The viscoelastic polyurethane foams made by the process of the present invention may be produced using a variety of conventional isocyanate-reactive components, at least one catalyst, at least one surface active agent (surfactant), an isocyanate component satisfying specified compositional requirements and liquid carbon dioxide dispersed or dissolved under pressure in one or more of the isocyanate reactive components and isocyanate components. The isocyanate component must include at least 25% by weight, based on total weight of the isocyanate component, of diphenylmethane polyisocyanate (MDI) which consists of monomeric diphenylmethane diisocyanates (mMDI) and polymeric diphenylmethane diisocyanates (pMDI). The isocyanate-reactive component may include any material containing isocyanate-reactive groups. The isocyanate-reactive component must have an average functionality of at least 1.5, preferably, at least 2.0 and an average hydroxyl number of at least 110. Examples of suitable isocyanate-reactive materials that may be included in the isocyanate-reactive component of the present invention include polyoxyalkylene polyols and polyester polyols.

The polyol component may preferably be a polyoxyalkylene polyol component optionally mixed with other isocyanate reactive polymers such as hydroxy-functional polybutadienes, polyester polyols, amino-terminated polyether polyols. Among the polyoxyalkylene polyols that can be used are the alkylene oxide adducts of a variety of suitable initiator molecules. Examples include, but are not limited to, dihydric initiators such as ethylene glycol, diethylene glycol, triethylene glycol, propylene glycol, dipropylene glycol, tripropylene glycol, neopentyl glycol, 1,3-propanediol, 1,4-butanediol, 1,6-hexanediol, 1,4-cyclo-hexanediol, 1,4-cyclohexanedimethanol, hydroquinone, hydroquinone bis(2-hydroxyethyl)ether, the various bisphenols, particularly bisphenol A and bisphenol F and bis(hydroxyalkyl) ether derivatives thereof, aniline, the various N-N-bis(hydroxyalkyl)anilines, primary alkyl amines and the various N-N-bis(hydroxyalkyl)amines; trihydric initiators such as glycerine, trimethylolpropane, trimethylolethane, the various alkanolamines such as ethanolamine, diethanolamine, triethanolamine, propanolamine, dipropanolamine, and tripropanolamine; tetrahydric initiators such as pentaerythritol, ethylene diamine, N,N,N',N'-tetrakis[2-hydroxyalkyl]ethylenediamines, toluene diamine and N,N,N',N'-tetrakis[hydroxyalkyl] toluene diamines; pentahydric initiators such as the various alkylglucosides, particularly α-methylglucoside; hexahydric imitators such as sorbitol, mannitol, hydroxyethylglucoside, and hydroxypropyl glucoside; octahydric initiators such as sucrose; and higher functionality initiators such as various starch and partially hydrolyzed starch-based products, and methylol group-containing resins and novolak resins such as those prepared from the reaction of as aldehyde, preferably formaldehyde, with a phenol, cresol, or other aromatic hydroxyl-containing compound.

Preferred polyoxyalkylene polyols for the production of the viscoelastic foams of the present invention are the oxypropylene-oxyethylene adducts of glycols, glycerine, pentaerythritol, trimethylolpropane, sorbitol, and sucrose having a number average equivalent weight of less than 700.

The most common process for polymerizing such polyols is the base-catalyzed addition of the oxide monomers to the active hydrogen groups of the polyhydric initiator and subsequently to the oligomeric polyol moieties. Potassium hydroxide and sodium hydroxide are the most commonly used basic catalysts.

A preferred class of polyoxyalkylene polyols in the present invention are the low unsaturation (low monol) poly(oxypropylene or poly(oxypropylene/ oxyethylene) polyols manufactured with double metal cyanide (DMC) catalyst. The poly(oxypropylene/oxyethylene) low unsaturation polyols used herein are prepared by oxyalkylating a suitably hydric initiator compound with propylene oxide or a combination of propylene oxide and ethylene oxide in the presence of a double metal cyanide catalyst. Preferably, double metal cyanide complex catalysts such as those disclosed in U.S. Patents 5,158,922 and 5,470,813, the contents of which are incorporated herein in their entireties by reference, are utilized, preferably for equivalent weights of less than 700 Da, and more preferably for equivalent weights of less than 500 Da or lower. The equivalent weights and molecular weights expressed herein in Daltons (Da) are number average equivalent weights and molecular weights unless indicated otherwise. Where the oxyalkylation is performed in the presence of double metal cyanide (DMC) catalysts, it is preferable that initiator molecules containing strongly basic groups such as primary and secondary amines be avoided. Further, where employing double metal cyanide complex catalysts, it is generally desirable to oxyalkylate an oligomer which contains a previously oxyalkylated "monomeric" initiator molecule or to oxyalkylate monomeric initiators that are added slowly to previously oxyalkylated initiators. Suitable procedures for production of low equivalent weight polyols using DMC catalyst can be found in U.S. Patents 5,689,012; 6,077,978 and 7,919,575 and in U.S. Patent Application 2008/0021191.

Polyol polymer dispersions represent a class of polyoxyalkylene polyol compositions that may be used alone or as a constituent in the poly(oxyalkylene) component used in the production of the viscoelastic foams of the current invention Polyol polymer dispersions are dispersions of polymer solids in a polyol. Polyol polymer dispersions that are useful in the present invention include, but are not limited to, the PHD and PIPA polymer modified polyols as well as the styrene-acrylonitrile (SAN) polymer polyols. A PHD polyol contains a dispersion of a polyurea in the polyether polyol, formed *in situ* by polymerization of a diamine and an isocyanate, while a PIPA (polyisocyanate polyaddition) polyol contains a polymer dispersion formed by reaction of an alkanolamine with an isocyanate. In theory, any base polyol known in the art may be suitable for production of polymer polyol dispersions, however, the poly(oxyalkylene) polyols described previously herein are preferred in the present invention.

SAN polymer polyols are typically prepared by the *in situ* polymerization of one or more vinyl monomers, preferably acrylonitrile and styrene, in a polyol, preferably, a poly(oxyalkylene) polyol, having a minor amount of natural or induced unsaturation. Methods for preparing SAN polymer polyols are described in, for example, U.S. Pat. Nos. 3,304,273; 3,383,351; 3,523,093; 3,652,639, 3,823,201; 4,104,236; 4,111,865; 4,119,586; 4,125,505; 4,148,840 and 4,172,825; 4,524,157; 4,690,956; Re-28715; and Re-29118. Polymer polyols produced in a lower equivalent weight as described in U. S. application 12/317563 are particularly suited to the production of viscoelastic foams of the current invention.

SAN polymer polyols useful in the present invention preferably have a polymer solids content within the range of from 3 to
60 wt.%, more preferably, from 5 to 50 wt.%, based on the total weight of the SAN polymer polyol. As mentioned herein above, SAN polymer polyols are usually prepared by the *in situ* polymerization of a mixture of acrylonitrile and styrene in a polyol. Where used, the ratio of styrene to acrylonitrile polymerized *in situ* in the polyol is typically in the range of from 100:0 to 0:100 parts by weight, based on the total weight of the styrene/acrylonitrile mixture, and preferably from 80:20 to 0:100 parts by weight.

PHD polymer modified polyols are usually prepared by the *in situ* polymerization of an isocyanate mixture with a diamine and/or hydrazine in a polyol, preferably, a polyether polyol. Methods for preparing PHD polymer polyols are described in, for example, U.S. Pat. Nos. 4,089,835 and 4,260,530. PIPA polymer modified polyols are usually prepared by the *in situ* polymerization of an isocyanate mixture with a glycol and/or glycol amine in a polyol.

PHD and PIPA polymer modified polyols useful in the present invention preferably have a polymer solids content within the range of from 3 to 30 wt.%, more preferably, from 5 to 25 wt.%, based on the total weight of the PHD or PIPA polymer modified polyol. As mentioned herein above, PHD and PIPA polymer modified polyols of the present invention may be prepared by the *in situ* polymerization of an isocyanate mixture, for example, a mixture which is composed of 80 parts by weight, based on the total weight of the isocyanate mixture, of 2,4-toluene diisocyanate and 20 parts by weight, based on the total weight of the isocyanate mixture, of 2,6-toluene diisocyanate, in a polyol, preferably, a poly(oxyalkylene) polyol.

By the term "polyoxyalkylene polyol or polyoxyalkylene polyol blend" herein is meant the total of all polyoxyalkylene polyether polyols, whether polyoxyalkylene polyether polyols containing no polymer dispersion or the base polyol(s) of one or more polymer dispersions.

The isocyanate-reactive mixture may optionally include a minor proportion of a chain extender or crosslinker in addition to the polyol(s). Suitable chain extenders include low molecular weight diols and diamines such as ethylene glycol, propylene glycol, diethylene glycol, dipropylene glycol, 2-methyl-1,3-propanediol, ethylene diamine, 1,6-hexanediol, and mixtures thereof. Suitable crosslinkers include triols and alkanolamines such as trimethylolpropane, glycerine, sorbitol, ethanolamine, diethanolamine, triethanolamine, and mixtures thereof. When a chain extender or crosslinker is included, it is typically used in an amount within the range of 0.1 to 5 wt.%, preferably from 0.5 to 3 wt.%, based on the amount of isocyanate-reactive mixture. Preferred chain extenders and crosslinkers have molecular weights less than 300 g/mole, more preferably less than 200 g/mole.

The polyisocyanate component used to produce the foams of the present invention must include at least 25% by weight, of diphenylmethane polyisocyanate (MDI) which consists of monomeric diphenylmethane diisocyanates (mMDI) and polymeric diphenylmethane diisocyanates (pMDI)., preferably, from 40 to 80% by weight, most preferably, 100% by weight. The polyisocyanate component (MDI) used to produce the foams of the current invention include from 50 to 90% of mMDI (15% to 60% pMDI) and preferably 40 to 80% and most preferably 60 to 70% of mMDI. From 10 to 85% by weight of the mMDI, preferably, from 10 to 40% by weight, most preferably, from 20 to 40% by weight of the mMDI will be 2,4-diphenylmethane diisocyanate. Optional polyisocyanates which may be included in the polyisocyanate component used to produce the foams of the present invention include: toluene diisocyanates (TDI), naphthalene diisocyanates, isophorone diisocyanate, hexamethylene diisocyanates (HDI, and polyisocyanates modified with carbodiimide, ester, urea, urethane, allophanate, isocyanurate, biuret, or other functionalities, and mixtures thereof. Isocyanate tipped prepolymers and quazi-prepolymers may also be employed, though not preferred,

The amount of polyisocyanate used is normally adjusted to arrive at a desired isocyanate index. Generally, the amount used will be within the range of 20 to 45 wt.%, more preferably from 25 to 40 wt.%, based on the combined amounts of isocyanate-reactive mixture and polyisocyanate.

In general, the NCO index will be within the range of 70 to 115. A more preferred index range is from 80 to 105.

Liquid carbon dioxide is used as the blowing agent to produce the foams of the present invention. This liquid carbon dioxide is introduced into the polyurethane-forming reaction mixture by dispersing or dissolving under pressure into one or more of the isocyanate or isocyanate reactive components in an amount of from 0.5 to 10% by weight, based on the weight of the isocyanate-reactive component, preferably, from 1% to 5% by weight, most preferably, from 1.5% to 4% by weight. This liquid carbon dioxide is introduced under temperature and pressure conditions which ensure that it will stay dispersed in liquid form or remain dissolved in the isocyanate or isocyanate reactive components until these components have been combined. Suitable temperatures are generally from 12.8°C to 37.8°C (55 to 100°F) and suitable pressures will generally be greater than 5.2 bar (75 psi), preferably, from 13.8 bar to 68.9 bar (200 to 1000 psi), most preferably, from 20.7 bar to 48.3 bar (300 to 700 psi). When combined with the isocyanate and isocyanate-reactive components, the liquid carbon dioxide is allowed to revert to its gaseous state via controlled pressure let down thus creating a froth and acting as a blowing agent. Suitable commercial equipment is available to carry out this operation including for example the Novaflex® machine technology from Hennecke; the Cardio® machine technology from Cannon-Viking and CO-2® machine technology from Beamech Group, ltd.

A combination of water, liquid carbon dioxide optionally is the preferred blowing agent. Additionally nitrogen gas may be introduced under pressure to facilitate bubble nucleation and blowing efficiency. Other blowing agents may optionally be used, however, the use of such additional blowing agents is not preferred. Blowing agents that may optionally be used include HFC's and other non-reactive gases such as methylene chloride, acetone and the like. If used, these optional blowing agents are generally included in an amount of less than 15 parts per 100 parts by weight of the isocyanate reactive component.

The foams of the present invention are produced in the presence of a surfactant, which helps to stabilize the foam until it cures and yield a fine and uniform cell structure. Suitable surfactants are those well known in the polyurethane industry. A wide variety of organosilicone surfactants are commercially available. Examples are Niax® L-620, L-655 and L-635 surfactants, products of Momentive Performance Materials , and Tegostab ® B 8244, B 8255 and B 2370 surfactants, products of Evonik industries. The surfactant is typically used in an amount within the range of 0.1 to 5, preferably from 0.2 to 3, parts per 100 parts of isocyanate-reactive mixture.

At least one catalyst is used to catalyze the polyurethane-forming reaction. It is common to use both an organoamine and an organotin compound for this purpose. Suitable polyurethane catalysts are well known in the art; an extensive list appears in U.S. Pat. No. 5,011,908. Suitable organotin catalysts include tin salts and dialkyltin salts of carboxylic acids. Examples include stannous octoate, dibutyltin dilaurate, dibutyltin diacetate, stannous oleate. Stannous octoate and dibutyltin dilaurate are particularly preferred. Preferred organoamine catalysts are tertiary amines such as trimethylamine, triethylamine, triethylenediamine, bis(2,2'-dimethylamino)ethyl ether, N-ethylmorpholine, diethylenetriamine. The polyurethane catalysts are typically used in an amount within the range of 0.001 to 2 parts, more preferably from 0.05 to 1 part, per 100 parts of isocyanate-reactive mixture.

The reaction mixture used to produce the foams of the present invention may optionally include a plasticizer. Suitable plasticizers are substances that add further softness to the foam. Examples include dioctyl phthalate, distearyl phthalate, diisodecyl phthalate, dioctyl adipate, tricresyl phosphate, triphenyl phosphate. When a plasticizer is used, it is preferably present in an amount within the range of 0.1 to 30 wt.%, more preferably from 5 to 20 wt. %, based on the amount of isocyanate-reactive mixture. Flame retardants, antioxidants, pigments, dyes, fillers, and many other commercial additives can also be included in the foams in conventional amounts.

The foams are prepared using methods that are well known in the industry. These methods may include continuous or discontinuous free-rise slabstock foam processes and molded foam processes. Continuous free-rise slabstock is the preferred production process. In a typical continuous slabstock process employing the use of liquid carbon dioxide blowing agent, the liquid carbon dioxide is held at a temperature and pressure suitable to maintain it in liquid form and is then metered into a stream of the combined polyols at a pressure of between 75 and 1000 psia to maintain the carbon dioxide in liquid or dissolved form. The polyol plus carbon dioxide and isocyanate components are continuously mixed together with the other formulation chemicals by passing through a mixing head and then into a pressure let down device that allows the carbon dioxide to convert to a gas and froth the mixture. The mixing head is maintained at a pressure that is just sufficient to keep the carbon dioxide dissolved or a dispersed liquid by maintaining a back pressure between 3.4 bar and 20.7 bar (between 50 and 300 psi). The reacting mixture is deposited directly onto the moving conveyor. The foam expands further and rises as it moves down the conveyor to form a continuous foam slab that is cut into blocks or buns of the desired length for curing and storage. After curing for one or more days, these foam buns can be cut into the desired shapes for the end-use applications. In the discontinuous process, the reactants are quickly mixed together through a head and passed through the pressure let down device. The frothed mixture is then deposited into a large box or other suitable container where further foam expansion occurs to form a bun of the lateral dimensions of the container.

A typical molded foam process usually employs a one-shot approach in which a specific amount of the isocyanate stream (the "A" side) is rapidly combined and mixed with a specific amount of the remaining formulation components (the "B" side). Liquid carbon dioxide can be mixed under pressure with the A or B side components prior to pressure let down into the mold. Additional streams may be employed to bring in one or more specific components not included with the "A" and "B" side stream. The mixture is quickly deposited as a froth into a mold that is then closed. The foam expands to fill the mold and produce a part with the shape and dimensions of the mold.

In an alternative free-rise or molded process, gaseous carbon dioxide may be pre-dissolved under pressure into one or more of the polyols or isocyanates fed to the mixing head or injectors.

Although less preferred, a prepolymer approach to making the foams can also be used. In this approach, a portion of the isocyanate-reactive mixture is reacted with the polyisocyanate, and the resulting prepolymer is then reacted with the remaining components. Liquid carbon dioxide may be dispersed or dissolved in this stream.

The foams of the present invention are characterized by a 95% height recovery time (D 3574 -08 Test M) of greater than 4 seconds, preferably, greater than 6 seconds, and, most preferably greater than 8 seconds.

Foams of the invention are further characterized by a low resilience, i.e., less than 20% as measured in the standard ball rebound test (ASTM D 3574-95, Test H). Preferably, the foams have resilience less than15%; most preferred are foams having a resilience of less than 10%. In addition, good quality foams of lower densities and softness can be produced. Preferably foams are produced with densities below 5 pcf (80 kg/cu. meter), more preferably below 4 pcf (64 kg/cu. meter) and most preferably of less than 3.5 pcf (56 kg/cu. meter). Preferably, the foams have a high degree of softness (indentation force deflection at 25% compression, ASTM D 3574, Test B₁). IFD (25%) values that are preferably less than 25 lb./50 sq. in. (111 N/323 sq. cm.), and more preferably less than 20 lb./50 sq. in. (90 N/323 sq. cm.). Alternatively, a compression load deflection (CLD) test (ISO 3386-1 with measurement at the first compression cycle) may be used to indicate the preferred foam softness. Preferred foams also have low compression sets. For example, preferred foams exhibit a compression set values (50% Compression Set and 75% Humid Aged Compression Set values, C_{d} (ASTM D 3574, Test D using Dry heat aging Test K or Steam autoclave Aging Test J1), of less than 20%, more preferably less than 10%.

The following examples merely illustrate the invention.

### EXAMPLES

### Preparation of Viscoelastic Foams -- General Procedure

The free-rise viscoelastic foams described in each of Tables 1 and 2 were produced using a one-third scale Maxfoam machine with Novaflex liquid CO₂ capabilities. The polyols in the formulations were combined and the liquid carbon dioxide and nitrogen gas (if used) were added to the combined polyol stream. The polyols plus carbon dioxide, isocyanate and additives were passed into the mixhead where they were thoroughly mixed together at a pressure that was controlled to a level to just keep the carbon dioxide in the liquid state. The pressure was let down by passing the mixture through a sieve pack where the conversion of the carbon dioxide to a gaseous state created a froth that was deposited directly onto a moving conveyor. The froth flowed to the conveyor sides and continued to expand as additional carbon dioxide gas was generated from the reaction of water with isocyanate. The expansion was primarily downwards as the conveyor bottom decreased in height through a series of four fall plates. As the urea and urethane reactions progressed, the expanding liquid was converted to a solid polyurethane foam block. The foam blocks were 91 cm wide and ranged from 70 to 90 cm high. After lining out, each foam grade was typically run for 300 cm. After curing for at least 2 days, test specimens (38x38x10 cm) were cut from the top, middle and bottom of the foam sections. The test specimens were roller crushed 3 times to a minimum thickness of 1.3 cm. These specimens were then conditioned for at least 16 hours at standard temperature (∼23°C) and humidity (∼50%) before testing. The foams in Table 2 were tested per the procedures in ASTM D 3574-08.

The formulations and foam properties are noted in the Tables which follow. The amounts of the components are reported in parts by weight.

### Description of Formulation Components

- POLYOL A:: A polyether triol prepared by KOH propoxylation of glycerin to an OH number of about 168 and an equivalent weight of about 333.
- POLYOL B:: A polyol blend comprising 33% by weight of a polyether monol, 23% by weight of a polyether diol and 45% by weight of a polyether triol, with the blend having a functionality of about 2.4, an OH number of about 120, and an equivalent weight of about 470. The monol was prepared by DMC catalyzed alkoxylation of an aliphatic alcohol with about 90% by weight of propylene oxide and 10% by weight of ethylene oxide to a hydroxyl number of about 18 and an equivalent weight of about 3120; and the polyether diol was prepared by DMC catalyzed alkoxylation of propylene glycol with about 80% by weight propylene oxide and 20% by weight ethylene oxide to an OH number of about 170 and an equivalent weight of about 330; and the polyether triol was prepared by DMC catalyzed alkoxylation of glycerin with about 80% by weight propylene oxide and 20% by weight ethylene oxide to an OH number of about 170 and an equivalent weight of about 330.
- POLYOL C:: A polymer polyol containing about 44% solids, and prepared by in situ polymerization of styrene and acrylonitrile in a glycerin initiated poly(oxypropyleneoxyethylene) polyol having a hydroxyl number of about 53 and containing about 11.5% of oxyethylene spread internally within the polyol.
- POLYOL D:: A glycerin initiated polyether polyol, having a functionality of about 2.8, an OH number of about 56 and an equivalent weight of about 1,000, which was prepared by alkoxylating glycerin and a small amount of propylene glycol with about 93% propylene oxide and about 7% by weight of ethylene oxide.
- POLYOL E:: A glycerin initiated poly(oxypropyleneoxyethylene) diol having a hydroxyl number of about 37, and containing about 73% of copolymerized oxyethylene.
- POLYOL F:: A polyether polyol having a hydroxyl number of about 167 which includes a surfactant and catalyst that is commercially available under the name Desmophen 24WB25 from Bayer MaterialScience.
- POLYOL G:: A reactive polyether triol with high polyoxyethylene content having a hydroxyl value of approximately 37 which is commercially available under the name Desmophen 41WB01 from Bayer MaterialScience.
- H20:: Water.
- FMA:: A glycol foam modifier having a hydroxyl number of about 1240, commercially available from Momentive Performance Materials as Arcol DP-1022.
- L-618:: A silicone surfactant commercially available as NIAX Surfactant L-618 from Momentive Performance Materials.
- L-626:: A silicone surfactant commercially available as NIAX Surfactant L-626 from Momentive Performance Materials.
- L-635:: A silicone surfactant commercially available as NIAX Surfactant L-626 from Momentive Performance Materials.
- Fire 600:: A commercially available phosphorus-bromine flame retardant available from Chemtura under the name FIREMASTER 600.
- NIAX A1:: an amine catalyst, commercially available from Momentive Performance Materials as NIAX A-1.
- 33-LV: An amine catalyst, commercially available from Air Products as DABCO 33LV.
- T10:: A tin catalyst, commercially available from Air Products DABCO T-10.
- MRS-4:: A polymeric polymethylene polyisocyanate having an NCO group content of about 32.1 % by weight, a functionality of about 2.4, and having a total monomer content of about 64% which comprises about 45% of the 4,4'-isomer, about 17% of the 2,4'-isomer and about 2% of the 2,2'-isomer, and about 36% by weight of higher molecular weight homologues of polymethylene polyisocyanates.
- M 1488:: A polymethylene polyphenylisocyanate having an NCO group content of about 32-33% by weight, a functionality of about 2.3 and containing about 24% polymeric and 76% by weight monomeric diphenylmethane diisocyanate of which about 29% is the 2,4'-isomer. of diphenylmethane diisocyanate.
- 10WB94:: A mixture of 4,4'-diphenylmethane diisocyanate with isomers and homologues of higher functionality having a monomeric MDI content greater than 80% and an NCO group content of about 32% which is commercially available under the name Desmodur PU 10WB94 from Bayer MaterialScience.

**TABLE 1**

| Ex. | 1 | 2 | 3 | 4 | 5 | 6(*ref.) |
|---|---|---|---|---|---|---|
| Polyol A | 58.0 | 58.0 | 68.0 | 68.0 | 68.0 | 0 |
| Polyol B | 0 | 0 | 0 | 0 | 0 | 50.0 |
| Polyol C | 40.0 | 40.0 | 30.0 | 30.0 | 30.0 | 30.0 |
| Polyol D | 0 | 0 | 0 | 0 | 0 | 18 |
| Polyol E | 2.0 | 2.0 | 2.0 | 2.0 | 2.0 | 2.0 |
| FMA | 2.5 | 2.5 | 2.5 | 2.5 | 2.5 | 0 |
| Water | 1.4 | 1.4 | 1.1 | 1.1 | 1.1 | 2.2 |
| Fire 600 | 2.0 | 2.0 | 2.0 | 2.0 | 2.0 | 1.0 |
| L-635 | 0.7 | 0.7 | 0 | 0 | 0 | 0.4 |
| L-618 | 0 | 0 | 0.5 | 0.5 | 0.25 | 0 |
| L-626 | 0.25 | 0.25 | 0.25 | 0.25 | 0.25 | 0 |
| A-1 | 0.5 | 0.5 | 0.5 | 0.5 | 0.5 | 0.05 |
| 33LV | 0 | 0 | 0 | 0 | 0 | 0.25 |
| T-10 | 0.1 | 0.1 | 0.08 | 0.08 | 0 | 0.13 |
| CO₂ | 1.5 | 1.5 | 2.0 | 2.0 | 2.0 | 4.0 |
| MRS-4 | 47.5 | 49.1 | 44.4 | 46.5 | 44.4 | 0 |
| M 1488 | 0 | 0 | 0 | 0 | 0 | 47.5 |
| NCO Index | 89.0 | 92.0 | 85.0 | 89.0 | 85.0 | 95.0 |
| Density (kg/m³) (lb/ft³) | 46.8 (2.92) | 47.6 (2.97) | 48.4 (3.02) | 48 (3.00) | 46.9 (2.93) | 24.5 (1.53) |
| Resilience (%) | 6 | 7 | 3 | 3 | 6 | 15 |
| Air Flow (cm³/min.) (ft³/min) | 850 (0.03) | 850 (0.03) | 1982 (0.07) | 1133 (0.04) | 18972 (0.67) | 15008 (0.53) |
| IFD Height (cm) (in.) | 10.21 (4.02) | 10.34 (4.07) | 9.96 (3.92) | 10.03 (3.95) | 10.11 (3.98) | 10.08 (3.97) |
| 25% IFD (N/323 cm²) (lb/50 in²) | 133 (29.9) | 183 (41.2) | 84 (18.9) | 108 (24.2) | 71 (15.9) | 63 (14.2) |
| 65% IFD (N/323 cm²) (lb/50 in²) | 278 (62.4) | 382 (85.8) | 183 (41.2) | 231 (52.0) | 175 (39.3) | 132 (29.7) |
| 25% IFD Return (N/323 cm²) (lb/50 in²) | 106 (23.9) | 137 (30.9) | 73 (16.3) | 91 (20.4) | 61 (13.7) | 41 (9.2) |
| Return Val. @ 25% (%) | 80.2 | 75.1 | 86.0 | 84.4 | 86.2 | 64.7 |
| S.F. 65%/25% | 2.09 | 2.08 | 2.18 | 2.15 | 2.47 | 2.09 |
| Tensile Strength (kPa) (psi) | 188 (27.2) | 234 (34.0) | 130 (18.9) | 164 (23.8) | 86 (12.5) | 66 (9.6) |
| Elongation (%) | 148 | 143 | 161 | 153 | 121 | 109 |
| Tear Strength (N/mm) (pli) | .208 (1.19) | .249 (1.42) | .131 (0.75) | .173 (0.99) | .163 (0.93) | .210 (1.20) |
| Comp. Set 50% (%) | 4.2 | 2.6 | 6.3 | 3.7 | 8.0 | 61.0 |
| HACS 75% (%) | 4.7 | 3.1 | 4.3 | 2.6 | 10.1 | 88.1 |
| Wet Set 50% (%) | 2.5 | 1.9 | 1.8 | 1.6 | 6.0 | 7.8 |
| 95% Ht. Recovery (s) | 13 | 17 | 7 | 7 | 4 | 9 |

| | | | | | | |
|---|---|---|---|---|---|---|
| * (Reference example) | | | | | | |

**TABLE 2**

| Example | 7 | 8 | 9 | 10 | 11 |
|---|---|---|---|---|---|
| Polyol F | 67 | 67 | 67 | 67 | 67 |
| Polyol G | 33 | 33 | 33 | 33 | 33 |
| H₂O | 1.8 | 1.8 | 1.8 | 2.2 | 1.8 |
| Des 10WB94 | 43 | 43 | 46 | 47.8 | 43 |
| Index | 80 | 80 | 85 | 80 | 80 |
| Liquid CO₂ | 1.6 | 2.0 | 2.0 | 2.0 | 3.0 |
| Density (kg/m³) | 39.2 | 36.7 | 36.5 | 33.1 | 33.3 |
| Tensile Strength (kPa) | 34 | 32 | 37 | 40 | 31 |
| Elongation at break (%) | 168 | 177 | 151 | 167 | 173 |
| Compression load deflection | | | | | |
| CLD at 40% (1^{st} curve at 22°C) (kPa) | 0.61 | 0.54 | 0.83 | 0.61 | 0.46 |
| CLD at 40% (4^{th} curve at 37°C) (kPa) | 0.54 | 0.48 | 0.72 | 0.50 | 0.41 |
| Compression set at 90% (%) | 84.3 | 85.0 | 79.1 | 82.9 | 85.1 |

The preceding examples are meant only as illustrations. The following claims define the invention.

## Claims

1. A process for the production of a viscoelastic polyurethane foam **characterized by** a resilience of less than 20% comprising:
1) combining
a) an isocyanate component comprising (i) at least 25% by weight of diphenylmethane polyisocyanate comprising from 50 to 90% by weight, based on the weight of (i), of monomeric MDI,
b) an isocyanate-reactive component comprising one or more isocyanate-reactive materials and having an average hydroxyl number of at least 110 and an average functionality of at least 1.5,
c) at least one catalyst,
d) at least one surface active agent, and
e) a blowing agent comprising carbon dioxide which is in liquid form or is dissolved in at least one of a), b), c) or d) at the time it is combined with components a), b), c), and d) where the amount of liquid carbon dioxide is at least 0.5% of the weight of component b)
to form a mixture,
2) allowing the mixture formed in 1) to froth by pressure reduction, and
3) allowing the mixture from 2) to react to form the viscoelastic foam.

2. The process of Claim 1 in which the monomeric MDI component of a)(i) includes at least 10% by weight of 2,4-diphenylmethane diisocyanate.

3. The process of Claim 1 in which the monomeric MDI component of a)(i) includes at least 20% by weight of 2,4-diphenylmethane diisocyanate.

4. The process of Claim 1 in which a)(i) comprises from 40 to 100% by weight of diphenylmethane polyisocyanate.

5. The process of Claim 1 in which a)(i) comprises 100% by weight of diphenylmethane polyisocyanate.

6. The process of Claim 1 in which a) includes (ii) toluene diisocyanate.

7. The process of Claim 1 in which b) comprises at least one polyether polyol having a hydroxyl number greater than 110 and a functionality of at least 2.

8. The process of Claim 1 in which the carbon dioxide is used in an amount of from 0.5 to 10% by weight, based on the weight of b).

## Patentansprüche

1. Verfahren zur Herstellung eines viskoelastischen Polyurethanschaums, der durch eine Elastizität von weniger als 20 % gekennzeichnet ist, umfassend:
1) Kombinieren von
a) einer Isocyanatkomponente, umfassend (i) mindestens 25 Gew.-% Diphenylmethanpolyisocyanat, das 50 bis 90 Gew.-%, bezogen auf das Gewicht von (i), monomeres MDI umfasst,
b) einer isocyanatreaktiven Komponente, die eine oder mehrere isocyanatreaktive Substanzen umfasst und eine durchschnittliche Hydroxylzahl von mindestens 110 und eine durchschnittliche Funktionalität von mindestens 1,5 aufweist,
c) mindestens einem Katalysator,
d) mindestens einem oberflächenaktiven Mittel und
e) einem Treibmittel, umfassend Kohlendioxid, das zu dem Zeitpunkt, zu dem es mit den Komponenten a), b), c) und d) kombiniert wird, in flüssiger Form vorliegt oder in mindestens einem von a), b), c) oder d) gelöst ist, wobei die Menge an flüssigem Kohlendioxid mindestens 0,5 % des Gewichts von Komponente b) beträgt,
zur Bildung einer Mischung,
2) Aufschäumenlassen der in 1) gebildeten Mischung durch Druckverringerung und
3) Reagierenlassen der Mischung aus 2) zur Bildung des viskoelastischen Schaums.

2. Verfahren nach Anspruch 1, bei dem die monomere MDI-Komponente von a)(i) mindestens 10 Gew.-% 2,4-Diphenylmethandiisocyanat enthält.

3. Verfahren nach Anspruch 1, bei dem die monomere MDI-Komponente von a)(i) mindestens 20 Gew.-% 2,4-Diphenylmethandiisocyanat enthält.

4. Verfahren nach Anspruch 1, bei dem a) (i) 40 bis 100 Gew.-% Diphenylmethanpolyisocyanat umfasst.

5. Verfahren nach Anspruch 1, bei dem a) (i) 100 Gew.-% Diphenylmethanpolyisocyanat umfasst.

6. Verfahren nach Anspruch 1, bei dem a) (ii) Toluoldiisocyanat umfasst.

7. Verfahren nach Anspruch 1, bei dem b) mindestens ein Polyetherpolyol mit einer Hydroxylzahl von mehr als 110 und einer Funktionalität von mindestens 2 umfasst.

8. Verfahren nach Anspruch 1, bei dem das Kohlendioxid in einer Menge von 0,5 bis 10 Gew.-%, bezogen auf das Gewicht von b), verwendet wird.

## Revendications

1. Procédé de fabrication d'une mousse de polyuréthane viscoélastique **caractérisée par** une résilience inférieure à 20 %, comprenant :
1) la combinaison
a) d'un constituant isocyanate comprenant (i) au moins 25 % en poids de polyisocyanate de diphénylméthane comprenant de 50 à 90 % en poids, relativement au poids de (i), de MDI monomère,
b) d'un constituant réagissant avec les isocyanates comprenant un ou plusieurs matériaux réagissant avec les isocyanates et ayant un indice d'hydroxyle moyen d'au moins 110 et une fonctionnalité moyenne d'au moins 1,5,
c) au moins un catalyseur,
d) au moins un agent surfactif, et
e) un agent gonflant comprenant du dioxyde de carbone qui est sous forme liquide ou qui est dissous dans au moins l'un de a), b), c) ou d) au moment où il est combiné avec les constituants a), b), c), et d), la quantité de dioxyde de carbone liquide représentant au moins 0,5 % du poids du constituant b)
pour former un mélange,
2) le fait de laisser le mélange formé à l'étape 1) mousser sous l'effet d'une réduction de pression, et
3) le fait de laisser le mélange obtenu à l'étape 2) réagir pour former la mousse viscoélastique.

2. Procédé selon la revendication 1, dans lequel le constituant MDI monomère de a) (i) comprend au moins 10 % en poids de diisocyanate de 2,4-diphénylméthane.

3. Procédé selon la revendication 1, dans lequel le constituant MDI monomère de a) (i) comprend au moins 20 % en poids de diisocyanate de 2,4-diphénylméthane.

4. Procédé selon la revendication 1, dans lequel a) (i) comprend de 40 à 100 % en poids de polyisocyanate de diphénylméthane.

5. Procédé selon la revendication 1, dans lequel a) (i) comprend 100 % en poids de polyisocyanate de diphénylméthane.

6. Procédé selon la revendication 1, dans lequel a) contient (ii) du diisocyanate de toluène.

7. Procédé selon la revendication 1, dans lequel b) comprend au moins un polyéther polyol ayant un indice d'hydroxyle supérieur à 110 et une fonctionnalité d'au moins 2.

8. Procédé selon la revendication 1, dans lequel le dioxyde de carbone est utilisé dans une quantité de 0,5 à 10 % en poids, relativement au poids de b).
